# EUROPEAN PATENT APPLICATION

(11) **EP 2 474 223 A1**
(43) Date of publication of application: **11.07.2012**
(21) Application number: 11150185.4
(22) Date of filing: 05.01.2011
(51) Int. Cl.: A01K 1/00, A01K 1/02

(54) **Fence door**

(71) Applicant: Van der Lee Stalinrichting en Voersystemen B.V., 5388 TW Nistelrode (NL)
(72) Inventor: van der Lee, Theodorus Johannes Maria, 5388 TW, Nistelrode (NL)
(74) Representative: 't Jong, Bastiaan Jacob

(57) **Abstract**

The invention relates to a fence door for a handling system for live stock, such as cattle and pigs, which fence door comprises:
- first and second spaced apart fence posts;
- a fence door arranged by pivots to the first fence post;
- at least a catch arranged on the second fence post for preventing the fence door from swinging to both sides of the second fence post; and
- means for urging the fence door in abutment with the catch into a closed position, wherein
a substantially triangular space is provided between the edge of the fence door adjacent to the second fence post and said second fence post, wherein the base of the triangular space is located at the bottom of the second fence post.

## Description

The invention relates to a fence door for a handling system for live stock, such as cattle and pigs, which fence door comprises:
- first and second spaced apart fence posts;
- a fence door arranged by pivots to the first fence post;
- at least a catch arranged on the second fence post for preventing the fence door from swinging to both sides of the second fence post; and
- means for urging the fence door in abutment with the catch into a closed position.

Such fence doors are known in the prior art. The fence doors can be urged to the closed position by a spring or due to gravity. These fence doors are used in live stock handling systems, for example to give pigs access to a feed box, in which one animal at the time can eat from a feed trough. In such cases the fence doors can be mechanically opened for the animals or the fence doors can be put in a position in which the doors can open in both directions, such that an animal can push against the fence door to open it.

These known fence doors have however disadvantages. The mechanically opened fence doors are complicated as a result of the operating mechanism to operate the doors. The fence doors, which can open in both directions, require a substantial space, as such fence doors should also be able to swing closed, when an animal has walked into a feed box. This requires substantially larger feed boxes, than the length of an animal.

These substantially larger feed boxes provide a further problem in view of regulations, which require animals to have more and more free living space outside of the feed boxes. These larger feed boxes take up a lot of space, which cannot be used as living space for the animals. This provides a problem especially with existing stables, because due to the regulations, less animals can be housed in the existing stables.

It is an object of the invention to reduce or even resolve the above mentioned disadvantages.

This object is achieved with a fence door according to the invention, which fence door is characterized in that a substantially triangular space is provided between the edge of the fence door adjacent to the second fence post and said second fence post, wherein the base of the triangular space is located at the bottom of the second fence post.

It has been discovered by the applicant, that animals quickly learn how to open a fence door, which can only open in one direction. Animals especially learn fast, when the reward is food.

By providing a substantially triangular space between the edge of the fence door and the fence post, an animal can put the snout in this triangular space and easily open the fence door by wedging the snout in the triangular space and pulling the door towards the animal. As a result, the fence door no longer needs to be able to open in both directions, which results in less space requirements, than known fence doors. Furthermore, the fence door according to the invention does not need complicated mechanisms to open or close the door, as an animal can do it on its own.

In an embodiment of the fence door according to the invention the pivot axis is tilted relative to the first fence post, such that the fence door is urged closed by gravity. In such an embodiment of the fence door no additional means, like a spring, are needed to urge the fence door to a closed position. This ensures a reliable functioning fence door.

In a preferred embodiment of the fence door according to the invention the pivot axis is not parallel to the plane through the first and second fence posts. As a result the triangular space is provided more at the side of the fence door, which corresponds more to the natural direction, in which the animals would approach the fence door.

In another preferred embodiment of the fence door according to the invention the fence door is diamond shaped. Such a shape of the fence door provides horizontal upper and lower edges, while the edge near the pivots is inclined to have gravity urge the door to a closed position. The edge of the diamond shaped fence door near the second post is under an angle with the second post resulting in the triangular space.

The invention further relates to a feed box comprising two elongate, parallel side fences, a head fence extending at one end between the two side fences and a fence door according to the invention arranged at the opposite end.

Preferably, the feed box according to the invention comprises a latch for locking the fence door. When an animal has entered the feed box, the fence door can be locked by the latch. This prevents the animal from exiting the box too earlier and prevents from other animals trying to enter the feed box, which could lead to fights between animals.

In another embodiment of the feed box according to the invention the latch is connected via a cable to a hydraulic or pneumatic cylinder. Such a control of the latch provides a simple construction, while a number of latches of adjacent feed boxes can easily be connected to each other and be operated with a single cylinder.

These and other features of the invention will be elucidated in conjunction with the accompanying drawings.
Figure 1 shows a perspective view of an embodiment of a feed box according to the invention.
Figure 2 shows a front view of the feed box according to figure 1.
Figure 3 shows a side view of the feed box according to figure 1.

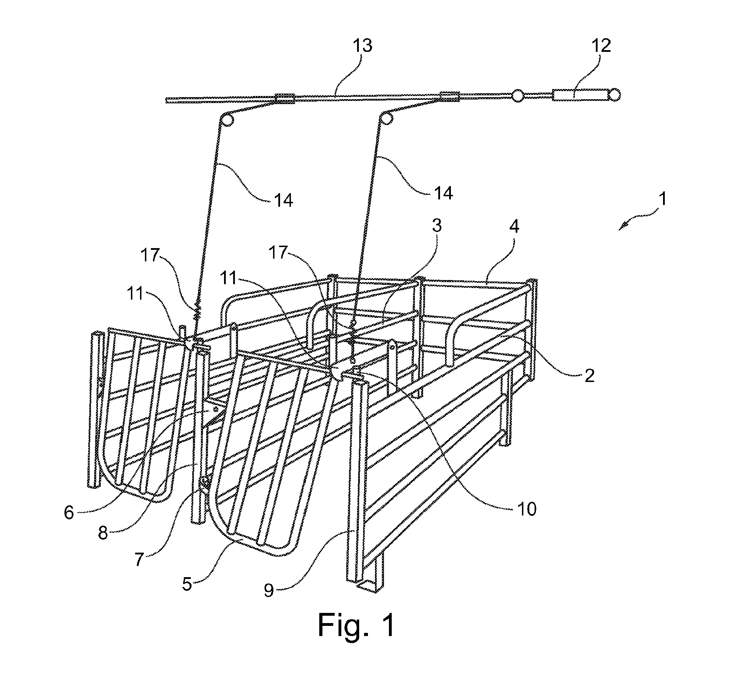

Figure 1 shows a feed box 1 according to the invention. The feed box 1 has two parallel side fences 2, 3 and a head fence 4. On the opposite side a fence door 5 is arranged.

The fence door 5 is arranged by pivots 6, 7 to a first fence post 8. A second fence post 9 is arranged on the other side of the fence door 5. This second fence post 9 had at the top a removable catch pin 10, which prevents the fence door 5 from swinging inside the feed box 1.

The fence door 5 is locked by a latch 11. The latch 11 can be opened by actuating a cylinder 12, which is connected to a guided bar 13 on which cables 14 of each latch 11 are arranged.

A spring 17 is provided between each latch 11 and cable 14 to ensure that the operating mechanism for operating the several latches 11 will not block, when a single latch 11 is blocked, for example when an animal pushes against the fence door 5. The springs 17 further ensure that as soon as the animal stops pushing against the door, the latch 11 will still unlock.

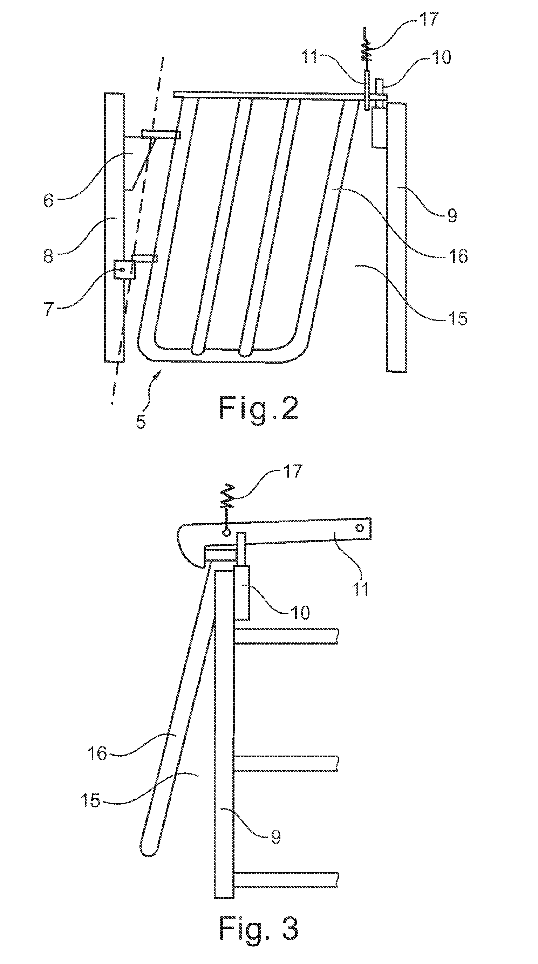

Figure 2 shows a front view, while figure 3 shows a side view of the feed box 1 according to figure 1.

The fence door 5 has a diamond shape. This diamond shape results in a substantially triangular space 15 between the edge 16 of the fence door 5 adjacent to the second fence post 9 and said second fence post 9. Because the fence door 5 is arranged by pivots 6 and 7 to the first post 8 and the pivot axis is tilted relative to the vertical direction, the fence door 5 will automatically be urged to the closed position due to gravity.

Due to this triangular space 15 an animal can easily push the snout between the edge 16 and the fence post 9, such that the fence door 5 opens and the animal can enter the feed box 1. As furthermore both the edge 16 and the second fence post 9 are straight and have no protrusions, the animal cannot wound itself when it moves through the triangular space 15.

## Claims

1. Fence door for a handling system for live stock, such as cattle and pigs, which fence door comprises:
- first and second spaced apart fence posts;
- a fence door arranged by pivots to the first fence post;
- at least a catch arranged on the second fence post for preventing the fence door from swinging to both sides of the second fence post; and
- means for urging the fence door in abutment with the catch into a closed position, **characterized in that**
a substantially triangular space is provided between the edge of the fence door adjacent to the second fence post and said second fence post, wherein the base of the triangular space is located at the bottom of the second fence post.

2. Fence door according to claim 1, wherein the pivot axis is tilted relative to the first fence post, such that the fence door is urged closed by gravity.

3. Fence door according to claim 2, wherein the pivot axis is not parallel to the plane through the first and second fence posts.

4. Fence door according to claim 2 or 3, wherein the fence door is diamond shaped.

5. Feed box comprising two elongate, parallel side fences, a head fence extending at one end between the two side fences and a fence door according to any of the preceding claims arranged at the opposite end.

6. Feed box according to claim 5, comprising a latch for locking the fence door.

7. Feed box according to claim 6, wherein the latch is connected via a cable to a hydraulic or pneumatic cylinder.
